(19) **Europäisches Patentamt / European Patent Office / Office européen des brevets**

(11) **EP 3 729 302 B1**

(12) **FASCICULE DE BREVET EUROPEEN**

(45) Date de publication et mention de la délivrance du brevet:
**07.06.2023  Bulletin 2023/23**

(21) Numéro de dépôt: **18842541.7**

(22) Date de dépôt: **20.12.2018**

(51) Classification Internationale des Brevets (IPC):
**G06F 30/00** *(2020.01)*      *G06F 111/02* *(2020.01)*
*G06F 111/08* *(2020.01)*      *G06F 111/10* *(2020.01)*

(52) Classification Coopérative des Brevets (CPC):
**G06F 30/00;** G06F 30/15; G06F 2111/02;
G06F 2111/08; G06F 2111/10

(86) Numéro de dépôt international:
**PCT/FR2018/053454**

(87) Numéro de publication internationale:
**WO 2019/122747 (27.06.2019 Gazette 2019/26)**

(54) **PROCÉDÉ ET SYSTÈME D'AIDE AU DÉPANNAGE D'UN SYSTÈME COMPLEXE**

VERFAHREN UND SYSTEM ZUR UNTERSTÜTZUNG DER FEHLERSUCHE EINES KOMPLEXES SYSTEMS

METHOD AND SYSTEM FOR ASSISTING TROUBLESHOOTING OF A COMPLEX SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **22.12.2017  FR 1762945**

(43) Date de publication de la demande:
**28.10.2020  Bulletin 2020/44**

(73) Titulaire: **Airbus Defence and Space SAS**
**31402 Toulouse Cedex 4 (FR)**

(72) Inventeurs:
 • **MARTY, Jean-Luc**
   **31402 TOULOUSE Cedex 4 (FR)**
 • **CANU, David**
   **31402 TOULOUSE Cedex 4 (FR)**
 • **ARNOLD, Alexandre**
   **31402 TOULOUSE Cedex 4 (FR)**

(74) Mandataire: **Plasseraud IP**
   **66, rue de la Chaussée d'Antin**
   **75440 Paris Cedex 09 (FR)**

(56) Documents cités:
   **US-A1- 2013 024 417     US-A1- 2017 312 614**
   **US-A1- 2017 323 481**

 • **HENDERSON S J ET AL: "Augmented Reality for Maintenance and Repair (ARMAR)", INTERNET CITATION, 1 août 2007 (2007-08-01), pages 1-62, XP002571033, Extrait de l'Internet: URL:http://graphics.cs.columbia.edu/projects/armar/pubs/henderson_feiner_AFRL_RH-WP-TR-2007-0112.pdf [extrait le 2010-03-02]**

## Description

Domaine technique

La présente invention concerne le domaine du dépannage d'éléments de systèmes complexes. Plus précisément, il concerne un procédé et un système d'aide au dépannage d'un système complexe.

Technique antérieure

Un système complexe comprend généralement une pluralité d'éléments reliés entre eux par de nombreuses interconnexions. Ces éléments peuvent par exemple être des composants mécaniques, électroniques et/ou des composants logiciels. De tels systèmes complexes existent dans des domaines d'activité très variés, comme, par exemple, l'industrie, l'automobile, le ferroviaire ou l'aviation. Ces systèmes complexes posent potentiellement des problèmes à un opérateur de maintenance pour localiser une défaillance observée par exemple par un utilisateur d'un tel système, c'est-à-dire pour déterminer le ou les éléments, en panne, qui sont à l'origine de cette défaillance.

Ces systèmes complexes disposent, en général, de tests de diagnostic ou de bon fonctionnement qui sont destinés à détecter et localiser les défaillances. Certains tests sont basés sur la technique des arbres de défaillance qui utilise une décomposition arborescente du système complexe. Cette technique permet la détermination des combinaisons minimales d'évènements qui conduisent à la perte de la fonction principale du système complexe, tel un dysfonctionnement ou un accident.

La technique des arbres de défaillance permet d'évaluer la vraisemblance de la survenue de l'évènement redouté à partir des combinaisons d'évènements élémentaires qui peuvent le produire. Ainsi, en connaissant les probabilités de ces évènements élémentaires on peut en déduire la probabilité de l'évènement redouté et l'impact sur celle-ci d'une réduction (ou augmentation) de telle ou telle des probabilités des évènements élémentaires. Les probabilités des évènements élémentaires sont ensuite utilisées pour identifier le ou les éléments en panne, du système complexe, qui sont à l'origine de la défaillance.

Il est courant que dans un système complexe, une défaillance puisse avoir des causes potentielles multiples ou différentes. Souvent, ces causes potentielles ne peuvent pas être testées automatiquement. Dans ce cas, un opérateur de maintenance doit être dépêché et une procédure d'aide au dépannage (en anglais, « troubleshooting ») doit être mise en oeuvre (voir par exemple le document US 2017/312614 A1).

À ce jour, une telle procédure d'aide au dépannage d'un système complexe à partir des probabilités élémentaires issues d'un arbre de défaillance n'est pas satisfaisante. En effet, rien ne permet à un opérateur de maintenance d'isoler une panne particulière à tester parmi l'ensemble des pannes envisagées. Dans ce cas, l'opérateur de maintenance peut être amené à passer plus de temps que nécessaire pour dépanner le système complexe et ainsi retarder le retour à l'état de fonctionnement normal du système complexe.

Résumé de l'invention

La présente invention vise donc à pallier de tels inconvénients en procurant un procédé ainsi qu'un système d'aide au dépannage d'un système complexe.

Un premier objet de l'invention concerne un procédé d'aide au diagnostic pour identifier un composant qui n'est pas sous surveillance automatique défaillant d'un système complexe comprenant une pluralité de composants mécaniques, électriques, électroniques et/ou logiciels reliés entre eux, chacun parmi une partie des composants étant sous surveillance automatique, associé à un ou plusieurs capteurs de défaillances, une partie des composants n'étant pas sous surveillance automatique, le procédé, mis en oeuvre par un processeur, comprenant :

- la réception d'un fichier contenant une modélisation de tout ou partie du système complexe par un arbre de défaillance définissant tout ou partie des combinaisons d'évènements provoquant un évènement-sommet associé à une défaillance du système complexe, l'arbre de défaillance comprenant une pluralité d'évènements intermédiaires et une pluralité d'événements de base,
- l'attribution d'une valeur de probabilité d'occurrence a priori, à chacun des évènements de base de l'arbre de défaillance, afin de générer un arbre de défaillance augmenté,
- l'attribution d'une information de défaillance à chacun des évènements de base et chacun des évènements intermédiaires de l'arbre de défaillance augmenté qui sont associés à un composant sous surveillance automatique, l'information de défaillance étant reçue à partir des capteurs de défaillances et décrivant une observation de l'état de fonctionnement du composant associé à l'évènement de l'arbre de défaillance augmenté,
- le calcul d'une valeur de probabilité d'occurrence a posteriori, pour chacun des évènements de l'arbre de défaillance augmenté, à partir des valeurs de probabilité d'occurrence a priori attribuées et des informations de défaillance attribuées,

- l'attribution d'un coût de dépannage à chacun des évènements de l'arbre de défaillance augmenté qui sont associés à un composant qui n'est pas sous surveillance automatique et qui est dépannable, le coût de dépannage définissant le temps nécessaire pour dépanner ledit composant,
- la modélisation, par un processus de décision markovien, PDM, à partir de l'arbre de défaillance augmenté, une ou plusieurs évolutions possibles du système complexe, en réponse à au moins une action de dépannage par l'opérateur de maintenance, d'au moins un composant, l'action de dépannage correspondant à une procédure d'identification de la défaillance ou la confirmation du bon fonctionnement du composant,
- la détermination d'une séquence optimale d'actions de dépannage du système complexe, selon une politique de décision qui minimise l'espérance de la somme des coûts de dépannage et qui est déterminée par l'application d'un algorithme de résolution de PDM.

Dans le procédé, l'étape de calcul d'une valeur de probabilité d'occurrence a posteriori peut comprendre les étapes de :

- construction d'un réseau bayésien à partir de l'arbre de défaillance augmenté, le réseau bayésien étant prévu pour réaliser des prédictions concernant des relations entre des évènements de l'arbre de défaillance augmenté à partir des informations de défaillances et des valeurs de probabilité a priori, et
- calcul de la valeur de probabilité à partir du réseau bayésien.

En outre, les noeuds du réseau bayésien représentent des entités correspondantes du système complexe, les arcs entre les noeuds étant associés à des distributions de probabilités conditionnelles qui représentent des probabilités d'évènements associées à certaines des entités du système complexe qui sont associées à des évènements associés à d'autres entités du système complexe.

Dans le procédé, l'étape d'attribution d'un coût de dépannage peut comprendre l'étape,

- d'obtention du coût de dépannage à partir d'une fonction de coût dépendante d'au moins un terme qui correspond au temps nécessaire pour dépanner le composant et un terme qui correspond à la difficulté d'accès physique pour dépanner ledit composant.

Dans le procédé, lequel l'étape de modélisation par un PDM peut comprendre l'étape de définition d'un PDM à horizon fini selon un quadruplet $\{S,A,T,R\}$ dans lequel,

- $S$ est un ensemble définissant les états dans lequel peut se trouver le système complexe à un instant t à partir d'un état initial de système complexe,
- $A$ est un ensemble définissant les actions de dépannage réalisables en fonction de l'état du système complexe et qui influent sur l'évolution de l'état courant du système complexe,
- $T$ est une fonction de transition définissant l'ensemble des probabilités de transition entre deux états du système complexe aux états $t$ et $t + 1$, en réponse aux actions de dépannage de l'ensemble $A$,
- $R$ est une fonction de récompense définissant l'ensemble des coûts de dépannage associés aux actions de dépannage de l'ensemble $A$.

En outre, lorsque $T$ défini l'ensemble des probabilités de défaillance, un état terminal du PDM est atteint lorsqu'au moins une probabilité de défaillance d'un événement de base est égale à 1.

Par ailleurs, lorsque $T$ défini l'ensemble des probabilités de défaillance, un état terminal du PDM est atteint lorsque l'ensemble des probabilités de défaillance est égal à 0.

Enfin, lorsque $T$ défini l'ensemble des probabilités de défaillance, un état terminal du PDM est atteint lorsque tous les noeuds dépannables du système complexe ont une probabilité de défaillance égale à 0 ou 1.

Un deuxième objet de l'invention concerne un produit de programme d'ordinateur comportant des instructions qui, lorsqu'elles sont exécutées par un processeur, conduisent ledit processeur à mettre en oeuvre un procédé selon le premier objet de l'invention.

Un troisième objet de l'invention concerne un système d'aide au diagnostic pour identifier un composant qui n'est pas sous surveillance automatique défaillant d'un système complexe comprenant une pluralité de composants mécaniques, électriques, électroniques et/ou logiciels reliés entre eux, chacun parmi une partie des composants étant sous surveillance automatique, associé à un ou plusieurs capteurs de défaillances, une partie des composants n'étant pas sous surveillance automatique, le système comprenant un serveur d'aide au diagnostic et un dispositif électronique qui sont tous deux prévus pour accéder à un réseau de communication :

- le serveur d'aide au diagnostic comprend un premier processeur configuré pour mettre en oeuvre un procédé selon le premier objet de l'invention, à partir d'un fichier contenant une modélisation de tout ou partie du système complexe par un arbre de défaillance définissant tout ou partie des combinaisons d'évènements provoquant un évènement-sommet associé à une défaillance du système complexe, l'arbre de défaillance comprenant une pluralité d'évènements intermédiaires et une pluralité d'événements de base,

- le dispositif électronique portable comprend un second processeur couplé à un dispositif d'entrée utilisateur et à un dispositif d'affichage, dans lequel le second processeur est configuré pour,

  o recevoir tout ou partie de la séquence optimale d'actions de dépannage du système complexe via le réseau de communication,
  o afficher sur le dispositif d'affichage une image représentative de l'action courante de dépannage à réaliser, à partir de la séquence optimale d'actions de dépannage du système complexe,
  o détecter un signal d'entrée provenant du dispositif d'entrée utilisateur qui est représentatif d'une entrée utilisateur durant l'affichage de l'image représentative de l'action courante de dépannage à réaliser,
  o en réponse à une entrée utilisateur qui est indicative de la détection d'une défaillance ou de la confirmation du bon fonctionnement du composant associé à l'action courante de dépannage à réaliser, afficher sur le dispositif d'affichage une image représentative de la prochaine action de dépannage à réaliser, à partir de la séquence optimale d'actions de dépannage du système complexe.

Dans le système :

- le second processeur du dispositif électronique portable est en outre configuré pour envoyer l'entrée utilisateur au premier processeur du serveur d'aide au dépannage,
- en réponse à réception de l'entrée utilisateur, le premier processeur est en outre configuré pour,
- déterminer la prochaine action de dépannage de la séquence optimale d'actions de dépannage du système complexe, et
- envoyer la prochaine action de dépannage de la séquence optimale d'actions de dépannage du système complexe au second processeur du dispositif électronique portable.

En outre, le dispositif d'entrée utilisateur peut est compris dans le dispositif d'affichage.

Brève description des dessins

D'autres caractéristiques et avantages de l'invention seront mieux compris à la lecture de la description qui va suivre et en référence aux dessins annexés, donnés à titre illustratif et nullement limitatif.

La **figure 1** représente un système d'aide au dépannage d'un système complexe selon l'invention.
La **figure 2** représente un procédé d'aide au dépannage d'un système complexe selon l'invention.
La **figure 3** représente un arbre de défaillance.
La **figure 4** représente un processus de décision markovien.

Pour des raisons de clarté, les éléments représentés ne sont pas à l'échelle les uns par rapport aux autres, sauf mention contraire.

Description des modes de réalisation

Dans le cadre de la description, on entend par « système complexe » un système (ou appareil ou encore objet) constitué d'un nombre important d'entités, électriques, électroniques, logicielles, mécaniques et leurs combinaisons, qui sont reliées entre elles. Il pourra par exemple et non limitativement s'agir d'un véhicule automobile, d'un aéronef, d'une centrale nucléaire, d'un système satellitaire ou encore de tout système informatique. En outre, on suppose que le système complexe est modélisé par un arbre de défaillance définissant tout ou partie des combinaisons d'évènements provoquant un évènement-sommet associé à une défaillance du système complexe. Dans ce cadre, l'arbre de défaillance comprend une pluralité d'évènements intermédiaires et une pluralité d'événements de base.

Le principe général de l'invention a pour point de départ le fait que les procédures de dépannage (en anglais, « troubleshooting ») sont réalisées sur des entités non supervisées d'un système complexe. La non-supervision signifie qu'un opérateur de maintenance d'un système complexe ne dispose d'aucune information concernant l'état de fonctionnement des entités à dépanner. Il lui est donc très difficile de faire face rapidement aux conséquences d'une défaillance et d'assurer la maintenabilité du système complexe. La maintenabilité est généralement définie comme l'aptitude d'un bien à être maintenu ou rétabli dans un état où il peut accomplir une fonction requise. Et ce, lorsque la maintenance est accomplie dans des conditions données, en utilisant des procédures et des moyens prescrits.

Ainsi, un opérateur de maintenance est souvent amené à tester une à une les entités potentiellement défaillantes du système complexe dans un ordre arbitraire. Dans ce processus, l'opérateur de maintenance observe alors périodiquement un système complexe dynamique qui est influencé, au moment de l'observation, par la prise d'une décision. Cette décision est prise parmi un ensemble d'actions possibles, à savoir, l'ensemble des entités qui peuvent être testées dans un état donné du système complexe. En d'autres termes, l'évolution du système complexe est le résultat de l'interaction, dans le temps, de lois aléatoires de transition du système complexe et du choix d'une suite d'actions réalisées par l'opérateur de maintenance.

Les inventeurs ont identifié qu'une telle procédure de dépannage peut être modélisée par un processus de décision markovien (en anglais, « Markov Decision Process »). En effet, les processus de décision markovien sont une approche d'optimisation utilisée pour résoudre des problèmes de prise de décision séquentielle, à chaque pas de temps, dans un environnement incertain, ce qui correspond au problème identifié par les inventeurs. Les processus de décision markovien permettent le calcul d'une politique donnant l'action à mettre en place selon l'état du système. Selon l'invention, il est proposé de combiner la technique des arbres de défaillance avec un processus de décision markovien. Et ce, afin de déterminer de manière optimale la suite d'actions de dépannage permettant de faire face rapidement aux conséquences d'une défaillance et d'assurer la maintenabilité du système complexe.

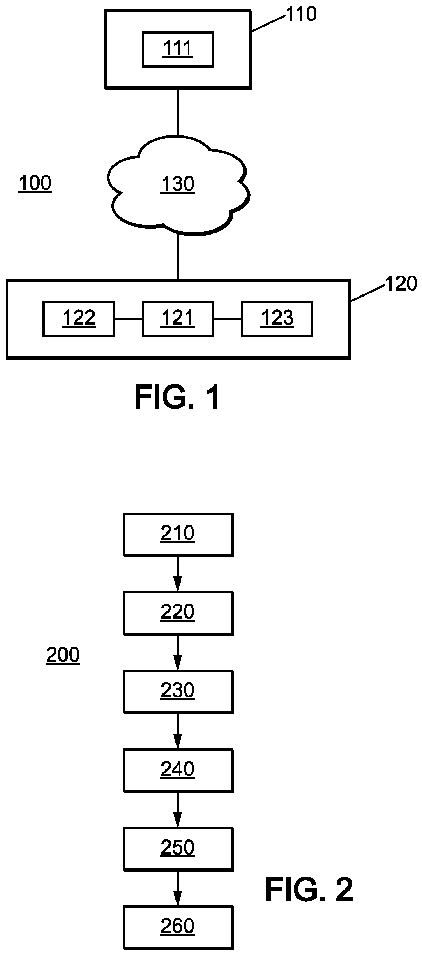

La **figure 1** illustre un système **100** d'aide au dépannage d'un système complexe (non représenté). Le système **100** comprend un serveur d'aide au dépannage **110** et un dispositif électronique portable **120** qui tous deux sont prévus pour accéder à un réseau de communication **130.** Dans une mise en oeuvre particulière, le système **100** comprend une pluralité de serveurs d'aide au dépannage **110** et/ou une pluralité de dispositifs électronique portable **120.** Dans une mise en oeuvre, le dispositif électronique **120** n'est pas portable. Dans une autre mise en oeuvre, le serveur d'aide au dépannage **110** et le dispositif électronique **120** sont compris dans un même équipement informatique.

Le serveur d'aide au dépannage **110** comprend un premier processeur **111** configuré pour exécuter au moins partiellement un procédé d'aide au dépannage d'un système complexe. Le procédé sera décrit ci-après en référence à la **figure 2.** Pour le moment, il suffit de retenir que le procédé selon l'invention est apte à déterminer une séquence optimale d'actions de dépannage du système complexe.

Le dispositif électronique portable **120** comprend un second processeur **121** couplé à un dispositif d'entrée utilisateur **122** et à un dispositif d'affichage **123.** Dans une mise en oeuvre particulière, le dispositif d'entrée utilisateur **122** est compris dans le dispositif d'affichage **123.** Dans un exemple de cette mise en oeuvre, le dispositif d'affichage **123** est un écran comprenant un panneau tactile sur tout ou partie d'une surface d'affichage de l'écran.

Dans l'exemple de la **figure 1,** le second processeur **121** est configuré pour recevoir tout ou partie de la séquence optimale d'actions de dépannage du système complexe via le réseau de communication **130.** Comme indiqué plus haut, la séquence optimale d'actions de dépannage du système complexe est déterminée par le premier processeur **111** du serveur d'aide au dépannage **110.** En outre, le second processeur **121** est configuré pour afficher sur le dispositif d'affichage **123** une image représentative de l'action courante de dépannage à réaliser, par un opérateur de maintenance, à partir de la séquence optimale d'actions de dépannage du système complexe. Dans un exemple, l'image représentative de l'action courante de dépannage à réaliser contient du texte et/ou des symboles qui mentionnent l'action courante de dépannage à réaliser.

Le second processeur **121** est également configuré pour détecter un signal d'entrée provenant du dispositif d'entrée utilisateur **121** qui est représentatif d'une entrée utilisateur durant l'affichage de l'image représentative de l'action courante de dépannage à réaliser. En réponse à une entrée utilisateur qui est indicative de la détection, par un opérateur de maintenance du système complexe, d'une défaillance ou de la confirmation du bon fonctionnement de l'entité associée à l'action courante de dépannage à réaliser, le second processeur **121** est configuré pour afficher sur le dispositif d'affichage **123** une image représentative de la prochaine action de dépannage à réaliser, à partir de la séquence optimale d'actions de dépannage du système complexe.

Le système **100** selon l'invention a pour effet que l'opérateur de maintenance d'un système complexe n'est plus tenu de tester dans un ordre arbitraire les entités potentiellement défaillantes du système complexe. En effet, selon l'invention, une première action de dépannage à réaliser sur le système complexe est tout d'abord déterminée au niveau du serveur d'aide au dépannage **110.** Ensuite, l'action suivante de dépannage à réaliser par l'opérateur de maintenance est affichée sur le dispositif électronique portable **120** en fonction du résultat observé suite à la précédente action de dépannage de l'entité courante par l'opérateur de maintenance. Enfin, l'ensemble des actions de dépannage est inclus dans la séquence optimale d'actions de dépannage du système complexe.

Dans une mise en oeuvre particulière du système **100,** le second processeur **121** du dispositif électronique portable **120** est en outre configuré pour envoyer l'entrée utilisateur au premier processeur **111** du serveur d'aide au dépannage **110** via le réseau de communication **130.** Par la suite, en réponse à réception de l'entrée utilisateur, le premier processeur **111** est en outre configuré pour déterminer la prochaine action de dépannage de la séquence optimale d'actions de dépannage du système complexe au second processeur dispositif électronique portable.

Cette mise en oeuvre particulière a pour effet de réduire le nombre de calculs nécessaires pour déterminer la séquence optimale des actions de dépannage à réaliser. En effet, dans cette mise en oeuvre, les calculs sont réalisés au fur et à mesure que le dépannage est réalisé par l'opérateur de maintenance du système complexe.

La **figure 2** illustre un procédé **200** d'aide au dépannage d'un système complexe selon l'invention, tel que mentionné plus haut.

Comme indiqué plus haut, on considère que le système complexe est modélisé par un arbre de défaillance définissant tout ou partie des combinaisons d'évènements provoquant un évènement-sommet associé à une défaillance du système complexe. Dans ce cadre, l'arbre de défaillance comprend une pluralité d'évènements intermédiaires et une pluralité d'événements de base. Dans l'invention, on considérera que les événements de base de l'arbre de défaillance augmenté sont indépendants.

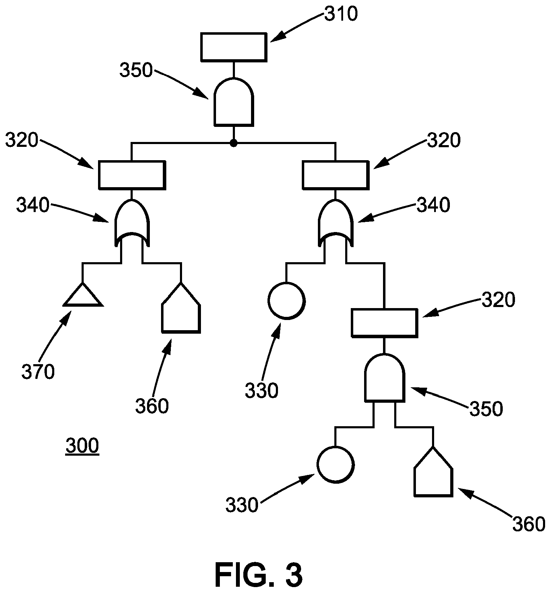

La **figure 3** illustre un exemple d'arbre de défaillance **300**. Les symboles utilisés pour représenter un arbre de défaillance sont normalisés comme le propose le standard NF EN 61025 « Analyse par arbre de pannes » (pour la version anglaise, IEC 61025 « Fault tree analysis »). Un arbre de défaillance peut être représenté sous la forme d'un fichier comme le propose par exemple, l'organisation Open PSA Initiative (en anglais, « Open Probabilistic Safety Assessment Initiative » ; https://open-psa.github.io). Dans l'exemple du format Open PSA, il s'agit d'un fichier de langage de balisage extensible (en anglais, « XML »).

Ainsi, dans l'exemple de la **figure 3,** on peut trouver dans un arbre de défaillance tel que l'arbre de défaillance **300,** un évènement-sommet **310,** des événements intermédiaires **320,** des événements de base **330,** des connecteurs OU **340** et des connecteurs ET **350.** Les événements **310, 320** sont représentés par des rectangles à l'intérieur desquels figurent les libellés de ces évènements. L'évènement-sommet **310** et les événements intermédiaires **320** se décomposent en une combinaison, de sorte que l'on trouve sous la boîte qui les représente, le symbole du connecteur **340, 350** qui lie les événements dont la combinaison est nécessaire et suffisante à la provoquer. Les événements de base **330** ou les conditions **360** ne se décomposent pas, de sorte que l'on trouve immédiatement sous la boîte qui les représente un symbole particulier : un cercle pour les événements de base et un pentagone (en forme de maison) pour les conditions. Le symbole du triangle **370** permet de renvoyer d'une page à une autre. Ainsi, on placera le symbole du triangle **370** sous un événement intermédiaire dont la décomposition commencera sur une autre page, dans laquelle cet événement apparaîtra en tête. Le symbole du connecteur OU **340** se distingue du symbole du connecteur ET **350** par sa base concave bombée vers haut alors que l'autre possède une base droite, horizontale. Bien sûr, d'autres éléments non mentionnés ici peuvent également faire partie de l'arbre de défaillance **300** selon le standard utilisé.

De retour au procédé **200** de la **figure 2,** dans l'étape **210,** on attribue une valeur de probabilité d'occurrence a priori, à chacun des événements de base de l'arbre de défaillance, afin de générer un arbre de défaillance augmenté. Par exemple, avec le format Open PSA, il peut s'agir de créer un nouvel attribut XML dans le fichier décrivant l'arbre de défaillance.

Il est connu que la valeur de probabilité d'occurrence a priori d'une défaillance est assimilée à sa fréquence d'occurrence future estimée dans le système complexe. La valeur de probabilité d'occurrence a priori est en général différente de la fréquence historique et peut s'écarter, pour un système complexe donné, de la probabilité d'occurrence moyenne évaluée sur un ensemble de systèmes complexes similaires. Dis autrement, la probabilité d'occurrence peut être vue comme la probabilité qu'une défaillance ait eu lieu entre un premier temps (par exemple, la mise en service du système complexe ou la dernière remise à neuf complète du système complexe) et un deuxième temps, dit temps de mission, correspondant à l'étape **210.**

Dans une mise en oeuvre particulière de l'étape **210,** on obtient la valeur de probabilité d'occurrence a priori, à partir d'une fonction de répartition caractérisant la loi de probabilité de défaillance propre à chaque événement de base de l'arbre de défaillance.

Dans un exemple, la loi de probabilité de défaillance, pour un événement de base donné, est une loi exponentielle de sorte que sa fonction de répartition est décrite par la formule suivante :

$$Q(t) = \begin{cases} 1 - e^{-\lambda t} & \lambda \geq 0 \\ 0 & \lambda < 0 \end{cases} \quad (1),$$

dans laquelle $t$ représente le temps et $\lambda$ est le paramètre d'intensité de la loi exponentielle représentant un taux de défaillance. Dans cet exemple, $t$ peut être initialisé au temps de mission, tel que mentionné plus haut.

Dans un autre exemple, la loi de probabilité de défaillance est une loi statistique choisie parmi un groupe composé de la loi exponentielle, la loi normale, la loi log-normale, la loi Weibull, la loi Gamma et de leurs combinaisons.

Dans une mise en oeuvre particulière de l'étape **210,** la valeur de probabilité d'occurrence a priori peut être estimée ou mise à jour à partir de données observées dans le monde physique (e.g. retour d'expérience) par l'opérateur de maintenance.

Par la suite, dans l'étape **220,** on attribue une information de défaillance à chacun des événements de base et chacun des événements intermédiaires de l'arbre de défaillance augmenté qui sont associés à une entité sous surveillance automatique. Comme mentionné plus haut, il peut s'agir de créer un nouvel attribut XML dans le fichier décrivant l'arbre de défaillance augmenté. Dans l'invention, une entité est « sous surveillance automatique » lorsqu'il existe un moyen d'observer l'état de fonctionnement de cette entité. Le moyen d'observation de l'état de fonctionnement de l'entité peut être un moyen humain (par exemple, les yeux de l'opérateur de maintenance) ou un moyen automatique (par exemple, un dispositif de surveillance électronique). Selon l'invention, on considère que l'information de défaillance décrit une observation de l'état de fonctionnement de l'entité associée à l'évènement de l'arbre de défaillance augmenté.

Dans un exemple, l'information de défaillance est binaire. Dans cet exemple, un premier état binaire indique que l'évènement intermédiaire concerné est défaillant tandis qu'un deuxième état binaire indique que l'évènement intermédiaire concerné fonctionne normalement.

Dans une mise en oeuvre particulière de l'étape **220,** on reçoit l'information de défaillance, en provenance d'un ou plusieurs capteurs de défaillance associés à une ou plusieurs entités.

Par la suite, dans l'étape **230,** on calcule, une valeur de probabilité d'occurrence a posteriori, pour chacun des événements de l'arbre de défaillance augmenté, à partir des valeurs de probabilité d'occurrences a priori attribuées et des informations de défaillance attribuées. Pour cela, on peut faire appel à la théorie des probabilités. En outre, pour prendre en considération le fait qu'une entité sous surveillance automatique est défaillante ou pas, il faudra également pouvoir déterminer la probabilité conditionnelle d'un événement sachant qu'un autre événement est réalisé ou pas.

Dans une mise en oeuvre particulière de l'étape **230,** on construit un réseau bayésien à partir de l'arbre de défaillance augmenté et on calcule la valeur de probabilité à partir du réseau bayésien.

En effet, il est connu qu'un arbre de défaillance dont les événements de base sont associés à de simples probabilités est un cas particulier de réseau bayésien (voir à ce sujet, par exemple, M. Bouissou, 2008, « Gestion de la complexité dans les études quantitatives de sûreté de fonctionnement de systèmes », Eyrolles ; M. Bouissou, 2000. « Deux méthodes originales pour calculer les performances d'un système possédant des états de fonctionnement dégradé ». 12ème congrès de fiabilité et maintenabilité, Montpellier, 2000 ; A. Bobbio, L. Portinale, M. Minichino, E. Ciancamerla, 2001. « Improving the analysis of dependable systems by mapping fault trees into Bayesian networks ». Reliability Engineering & System Safety. Volume 71, Issue 3, March 2001, Pages 249-260).

Dans cette mise en oeuvre particulière, le réseau bayésien est prévu pour réaliser des prédictions concernant des relations entre des événements de l'arbre de défaillance augmenté à partir des informations de défaillances et des valeurs de probabilité à priori. Pour cela, les noeuds du réseau bayésien représentent des entités correspondantes du système complexe. En outre, les arcs entre les noeuds sont associés à des distributions de probabilités conditionnelles qui représentent des probabilités d'événements associées à certaines des entités du système complexe qui sont associées à des événements associés à d'autres entités du système complexe.

Dans l'étape **240,** on attribue un coût de dépannage à chacun des événements de l'arbre de défaillance augmenté qui sont associés à une entité qui n'est pas sous surveillance automatique et qui est dépannable. Dans l'invention, une entité est dite « dépannable » si l'opérateur de maintenance peut y accéder pour déterminer si l'entité est défaillante ou pas. Selon l'invention, on considère que le coût de dépannage définit la difficulté d'identification de la défaillance par l'opérateur de maintenance, de l'entité associée à l'événement de l'arbre de défaillance augmenté. En d'autres termes, le coût de dépannage est une perte liée à la difficulté de déterminer si une entité est défaillante. Par exemple, le coût de dépannage peut servir à définir la difficulté de l'accès physique par l'opérateur de maintenance à l'entité potentiellement défaillante.

Dans l'invention, on considère que, suite à une action de dépannage d'une entité par l'opérateur de maintenance, l'évolution possible du système complexe sera accompagnée d'effets économiques mesurables. Ainsi, il a été choisi de définir le coût de dépannage comme un critère économique permettant de comparer les effets mesurés, et ce, afin de choisir les actions qui contrôlent le dépannage du système complexe de façon optimale. Le coût de dépannage permet donc de mesurer l'effet économique d'une action de dépannage donnée dans un état donné du système complexe. Le problème ainsi résolu par l'invention consiste à déterminer une séquence d'actions de dépannage à réaliser pour minimiser l'effet économique total espéré, en connaissant la distribution de probabilité de l'état initial du système complexe.

Dans une mise en oeuvre particulière de l'étape **240,** on obtient le coût de dépannage à partir d'une fonction de coût dépendante d'au moins un terme qui correspond à une mesure ou à une estimation de la difficulté d'identification de la défaillance par l'opérateur de maintenance de l'entité. Par exemple, la fonction de coût est choisie parmi un groupe composé d'une fonction linéaire par morceaux, d'une fonction exponentielle et de leurs combinaisons. En outre, par exemple, le terme de la fonction de coût est choisi parmi un groupe composé du temps nécessaire pour dépanner l'entité, du nombre de personnes nécessaires pour dépanner l'entité, du coût monétaire nécessaire pour dépanner l'entité, de la difficulté d'accès pour dépanner l'entité et de leurs combinaisons.

Dans l'étape **250,** on modélise par un processus de décision markovien, à partir de l'arbre de défaillance augmenté, une ou plusieurs évolutions possibles du système complexe, en réponse au moins une action de dépannage par l'opérateur de maintenance, d'au moins une entité. Selon l'invention, on considère que l'action de dépannage correspond à une procédure d'identification de la défaillance ou la confirmation du bon fonctionnement de l'entité.

Pour rappel, un processus de décision markovien est un processus de contrôle stochastique discret. À chaque étape, le processus est dans un certain état $s$, et un agent choisit une action $a$. La probabilité que le processus arrive à l'état $s'$ est déterminée par l'action choisie. Plus précisément, elle est décrite par la fonction de transition d'états $T(s,a,s')$. Donc, l'état $s'$ dépend de l'état actuel $s$ et de l'action $a$ sélectionnée par le décideur. Cependant, pour un $s$ et un $a$, le prochain état est indépendant des actions et des états précédents. On dit alors que le processus satisfait la propriété de Markov. Enfin, quand le processus passe de l'état $s$ à $s'$, l'agent gagne une récompense positive ou négative $R(s,a,s')$.

Dans une mise en oeuvre particulière de l'étape **250,** on définit le processus de décision markovien dans un horizon fini selon un quadruplet $\{S,A,T,R\}$ dans lequel,

- $S$ est un ensemble définissant les états dans lesquels peut se trouver le système complexe à un instant $t$ à partir d'un état initial de système complexe,
- $A$ est un ensemble définissant les actions de dépannage réalisables en fonction de l'état du système complexe et qui influent sur l'évolution de l'état courant du système complexe,
- $T$ est une fonction de transition définissant l'ensemble des probabilités de transition entre deux états du système complexe aux états $t$ et $t+1$, en réponse aux actions de dépannage de l'ensemble $A$. Dans une mise en oeuvre de l'invention, $T(s,a,s')$ correspond à la probabilité de passer à l'état $s'$, lorsque l'on réalise l'action $a$ dans l'état $s$ et que l'entité associée à l'action $a$ est considérée comme défaillante. Ainsi, dans cette mise en oeuvre, $T(s,a,s')$ est une probabilité de défaillance,
- $R$ est une fonction de récompense définissant l'ensemble des coûts de dépannage associés aux actions de dépannage de l'ensemble $A$. Dans l'invention, la récompense est négative et correspond donc à un coût. Ainsi, $R(s,a,s')$ est le coût perçu après avoir réalisé l'action $a$ dans l'état $s$ qui conduit le système dans l'état $s'$.

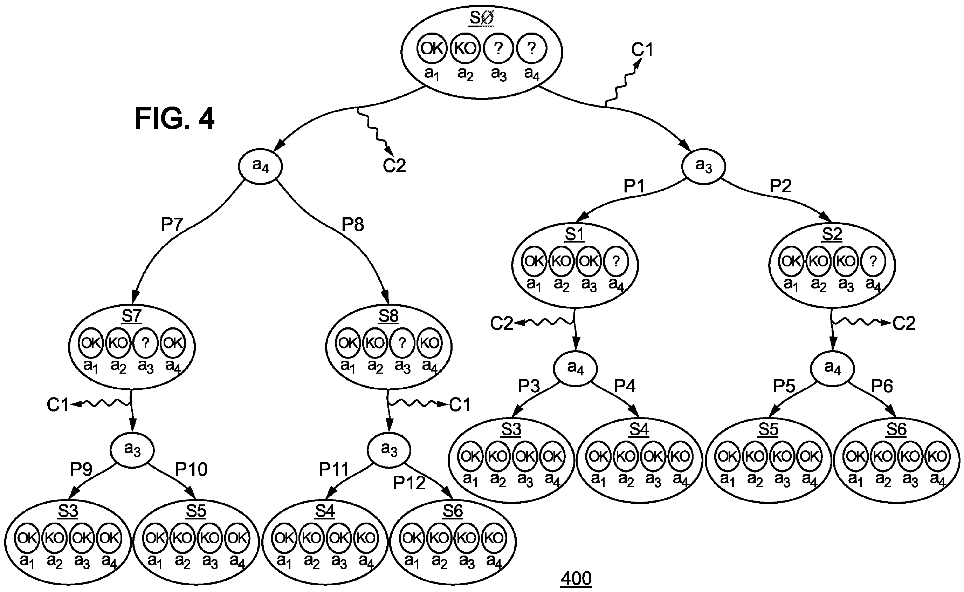

La **figure 4** illustre un processus de décision markovien **400** qui modélise l'évolution d'un système complexe en cours de dépannage, selon une dynamique markovienne. L'exemple de processus de décision markovien **400** va maintenant être décrit selon le formalisme mentionné plus haut.

L'ensemble $S$ du processus de décision markovien **400** est défini selon la formule suivante :

$$S = \{ S0, S1, S2, S3, S4, S5, S6, S7, S8, S9, S10, S11, S12 \} \quad (2),$$

dans laquelle l'état $S0$ représente l'état initial du système complexe à l'instant $t = 0$. Dans une mise en oeuvre particulière, $t$ est initialisé au moment où commence le dépannage du système complexe. Dans l'exemple de la **figure 4,** les états $S1$ et $S2$ peuvent être atteints, en partant de l'état $S0$, sous l'influence de l'action $a3$.

L'ensemble $A$ du processus de décision markovien **400** est défini selon la formule suivante

$$A = \{ a1, a2, a3, a4 \} \quad (3),$$

dans laquelle les indices 1, 2, 3,4 font référence à une entité du système complexe. Ainsi, l'action $a1$ correspond à l'action de dépannage associée à l'entité 1 du système complexe. Dans l'exemple de la **figure 4,** dans un état donné de l'ensemble $S$, une action de dépannage qui a conclu au bon fonctionnement de l'entité concernée est représentée par un cercle comprenant le texte « OK ». Par contre, une action de dépannage qui a conclu à la défaillance de l'entité concernée est représentée par un cercle comprenant le texte « KO ». Enfin, une action de dépannage qui n'a pas encore été entreprise est représentée par un cercle comprenant un point d'interrogation. Ainsi, dans la **figure 4,** l'état $S0$ décrit la situation suivante :

- l'entité 1 est considérée comme fonctionnant correctement,
- l'entité 2 est considérée comme défaillante, et
- les entités 3 et 4 n'ont pas encore été testées.

L'ensemble $T$ du processus de décision markovien **400** est défini selon la formule suivante

$$T = \{ p1, p2, p3, p4, p5, p6, p7, p8, p9, p10, p11, p12 \} \quad (4).$$

Dans l'invention, une probabilité p de la fonction transition T correspond à la probabilité que l'entité testée soit défaillante.

Grâce à l'attribution d'une valeur de probabilité d'occurrence a priori à chacun des événements de base de l'arbre défaillance augmenté associé au système complexe, il est possible de déterminer les probabilités *pi*. En effet, ces probabilités correspondent à des probabilités conditionnelles définies selon la formule suivante :

$$T(s, a, s') = P(X_{t+1} = s' \mid X_t = s, A_t = a) \quad (5).$$

Ainsi, dans l'exemple de la **figure 4,** la probabilité p6 est obtenu en calculant la probabilité conditionnelle que l'entité 4 soit défaillante sachant que l'état précédent est *S*2. Sous forme mathématiques, le calcul peut être formulé comme suit :

$$p6 = (X_{t+1} = S6 \mid X_t = S2, A_t = a4) = P(S6 \mid S2, a4) \quad (6)$$

Pour ce calcul, on peut faire appel à un réseau bayésien comme mentionné plus haut.

L'ensemble *R* du processus de décision markovien **400** est défini selon la formule suivante $R = \{c1, c2\}$ (6). Dans l'exemple de la **figure 4,** *c*1 correspond au coût associé à la réalisation de l'action 3, et *c*2 correspond au coût associé à la réalisation de l'action 4.

Dans l'étape **260,** on détermine successivement une séquence optimale d'actions de dépannage du système complexe, selon une politique de décision qui minimise l'espérance de la somme des coûts de dépannage et qui est déterminée par l'application d'un algorithme de résolution de processus de décision markovien. Dans l'invention, on définit l'espérance d'un coût de dépannage associé à une action comme le produit entre la probabilité de transition sous l'influence de l'action et le coût de dépannage associé à cette action. Ainsi, la politique de décision obtenue par résolution du processus de décision markovien fournira l'action de dépannage à prendre dans tous les états de l'ensemble *S* observés successivement suite aux résultats des actions de dépannage précédentes. Toutefois, il est également envisagé d'utiliser des algorithmes dans lesquels la politique de décision obtenue par résolution du processus de décision markovien fournira l'ensemble des actions de dépannage à prendre dans tous les états que l'ensemble *S* pourrait théoriquement prendre.

En résolvant le processus de décision markovien, on obtient une politique qui indique quelle est l'action optimale à faire dans chaque état du système complexe. Dès lors, avec une seule et même politique, la séquence d'action qui sera finalement choisie dépendra de l'évolution réelle du processus.

Dans un exemple, l'algorithme de résolution de processus de décision markovien est choisi parmi un groupe composé de value itération (en français, itération sur les valeurs), Q-Learning, SARSA, UCT, Dynamic Programming, Policy itération et Temporal Différence Learning.

Dans une première mise en oeuvre particulière (non représentée), on détermine un état terminal du processus de décision markovien où l'on arrête de prendre des actions. En d'autres termes, dans l'état terminal du processus de décision markovien, le procédé **200** ne fourni plus d'actions à réaliser à l'opérateur de maintenance. Cette mise en oeuvre a pour effet de favoriser le retour rapide à un état stable du système complexe.

Dans cette mise en oeuvre particulière, on envisage le cas où T défini l'ensemble des probabilités de défaillance, comme indiqué plus haut.

Dans ce cas, on considère avoir atteint un état terminal du processus de décision markovien lorsque l'état courant du processus de décision markovien remplit la/les condition(s) suivante(s), prises seules ou en combinaison :

- un événement de base est identifié comme étant défaillant. Ce sera le cas, par exemple, lorsqu'au moins une probabilité de défaillance d'un événement de base est égale à 1 ;
- tous les événements de base sont identifiés comme n'étant pas défaillants. Ce sera le cas, par exemple, lorsque l'ensemble des probabilités de défaillance est égal à 0 ; et
- aucune action de dépannage ne peut plus être réalisée. Ce sera le cas, par exemple, lorsque tous les noeuds dépannables du système complexe ont une probabilité de défaillance égale à 0 ou 1.

**Revendications**

1. Procédé (**200**) d'aide au diagnostic d'un système complexe comprenant une pluralité de composants mécaniques, électriques, électroniques et/ou logiciels reliés entre eux, chacun des composants parmi une partie des composants étant sous surveillance automatique et associé à un ou plusieurs capteurs de défaillances, une partie des composants n'étant pas sous surveillance automatique, le procédé, mis en oeuvre par un processeur, comprenant :

- la réception d'un fichier contenant une modélisation de tout ou partie du système complexe par un arbre de défaillance (**300**) définissant tout ou partie des combinaisons d'évènements provoquant un évènement-sommet (**310**) associé à une défaillance du système complexe, l'arbre de défaillance comprenant une pluralité d'évènements intermédiaires (**320**) et une pluralité d'événements de base (**330**),

- l'attribution (**210**) d'une valeur de probabilité d'occurrence a priori, à chacun des évènements de base de l'arbre de défaillance, afin de générer un arbre de défaillance augmenté,

- l'attribution (**220**) d'une information de défaillance à chacun des évènements de base et chacun des évènements intermédiaires de l'arbre de défaillance augmenté qui sont associés à un composant sous surveillance automatique, l'information de défaillance étant reçue à partir des capteurs de défaillances et décrivant une observation de l'état de fonctionnement du composant associé à l'évènement de l'arbre de défaillance augmenté,

- le calcul (**230**) d'une valeur de probabilité d'occurrence a posteriori, pour chacun des évènements de l'arbre de défaillance augmenté, à partir des valeurs de probabilité d'occurrence a priori attribuées et des informations de défaillance attribuées,

- l'attribution (**240**) d'un coût de dépannage à chacun des évènements de l'arbre de défaillance augmenté qui sont associés à un composant qui n'est pas sous surveillance automatique et qui est dépannable, le coût de dépannage définissant le temps nécessaire pour dépanner ledit composant,

- la modélisation (**250**), par un processus de décision markovien, PDM, à partir de l'arbre de défaillance augmenté, d'une ou de plusieurs évolutions possibles du système complexe, en réponse à au moins une action de dépannage par l'opérateur de maintenance, d'au moins un composant, l'action de dépannage correspondant à une procédure d'identification de la défaillance ou la confirmation du bon fonctionnement du composant,

- la détermination (**260**) d'une séquence optimale d'actions de dépannage du système complexe, selon une politique de décision qui minimise l'espérance de la somme des coûts de dépannage et qui est déterminée par l'application d'un algorithme de résolution de PDM.

2. Procédé selon a revendication 1, dans lequel l'étape de calcul d'une valeur de probabilité d'occurrence a posteriori comprend les étapes de :

- construction d'un réseau bayésien à partir de l'arbre de défaillance augmenté, le réseau bayésien étant prévu pour réaliser des prédictions concernant des relations entre des évènements de l'arbre de défaillance augmenté à partir des informations de défaillances et des valeurs de probabilité a priori, et
- calcul de la valeur de probabilité à partir du réseau bayésien.

3. Procédé selon la revendication 2, dans lequel les noeuds du réseau bayésien représentent des composants correspondants du système complexe, les arcs entre les noeuds étant associés à des distributions de probabilités conditionnelles qui représentent des probabilités d'évènements associées à certains des composants du système complexe qui sont associées à des évènements associés à d'autres composants du système complexe.

4. Procédé selon les revendications précédentes, dans lequel l'étape d'attribution d'un coût de dépannage comprend l'étape d'obtention du coût de dépannage à partir d'une fonction de coût dépendante d'au moins un terme qui correspond au temps nécessaire pour dépanner le composant et un terme qui correspond à la difficulté d'accès physique pour dépanner ledit composant.

5. Procédé selon les revendications précédentes, dans lequel l'étape de modélisation par un PDM comprend l'étape de définition d'un PDM à horizon fini selon un quadruplet $\{S,A,T,R\}$ dans lequel,

- $S$ est un ensemble définissant les états dans lequel peut se trouver le système complexe à un instant $t$ à partir d'un état initial de système complexe,
- $A$ est un ensemble définissant les actions de dépannage réalisables en fonction de l'état du système complexe et qui influent sur l'évolution de l'état courant du système complexe,
- $T$ est une fonction de transition définissant l'ensemble des probabilités de transition entre deux états du système complexe aux états $t$ et $t + 1$, en réponse aux actions de dépannage de l'ensemble $A$,
- $R$ est une fonction de récompense définissant l'ensemble des coûts de dépannage associés aux actions de dépannage de l'ensemble $A$.

6. Procédé selon la revendication 5 dans lequel, lorsque $T$ défini l'ensemble des probabilités de défaillance, un état terminal du PDM est atteint lorsqu'au moins une probabilité de défaillance d'un événement de base est égale à 1.

7. Procédé selon la revendication 5 dans lequel, lorsque T défini l'ensemble des probabilités de défaillance, un état terminal du PDM est atteint lorsque l'ensemble des probabilités de défaillance est égal à 0.

8. Procédé selon la revendication 5 dans lequel, lorsque *T* défini l'ensemble des probabilités de défaillance, un état terminal du PDM est atteint lorsque tous les noeuds dépannables du système complexe ont une probabilité de défaillance égale à 0 ou 1.

9. Produit de programme d'ordinateur comportant des instructions qui, lorsqu'elles sont exécutées par un processeur, conduisent ledit processeur à mettre en oeuvre un procédé selon l'une quelconque des revendications précédentes.

10. Système (**100**) d'aide au diagnostic d'un système complexe comprenant une pluralité de composants mécaniques, électriques, électroniques et/ou logiciels reliés entre eux, chacun des composants parmi une partie des composants étant sous surveillance automatique et associé à un ou plusieurs capteurs de défaillances, une partie des composants n'étant pas sous surveillance automatique, le système comprenant un serveur d'aide au diagnostic (**110**) et un dispositif électronique (**120**) qui sont tous deux prévus pour accéder à un réseau de communication (**130**):

    - le serveur d'aide au diagnostic comprend un premier processeur (**111**) configuré pour mettre en oeuvre un procédé (**200**) selon l'une quelconque des revendications 1 à 8, à partir d'un fichier contenant une modélisation de tout ou partie du système complexe par un arbre de défaillance (**300**) définissant tout ou partie des combinaisons d'évènements provoquant un évènement-sommet (**310**) associé à une défaillance du système complexe, l'arbre de défaillance comprenant une pluralité d'évènements intermédiaires (**320**) et une pluralité d'évènements de base (**330**),
    - le dispositif électronique portable comprend un second processeur (**121**) couplé à un dispositif d'entrée utilisateur (**122**) et à un dispositif d'affichage (**123**), dans lequel le second processeur est configuré pour,

        ◦ recevoir tout ou partie de la séquence optimale d'actions de dépannage du système complexe via le réseau de communication,
        ◦ afficher sur le dispositif d'affichage une image représentative de l'action courante de dépannage à réaliser, à partir de la séquence optimale d'actions de dépannage du système complexe,
        ◦ détecter un signal d'entrée provenant du dispositif d'entrée utilisateur qui est représentatif d'une entrée utilisateur durant l'affichage de l'image représentative de l'action courante de dépannage à réaliser,
        ◦ en réponse à une entrée utilisateur qui est indicative de la détection d'une défaillance ou de la confirmation du bon fonctionnement du composant associé à l'action courante de dépannage à réaliser, afficher sur le dispositif d'affichage une image représentative de la prochaine action de dépannage à réaliser, à partir de la séquence optimale d'actions de dépannage du système complexe.

11. Système selon la revendication 10 dans lequel,

    - le second processeur du dispositif électronique portable est en outre configuré pour envoyer l'entrée utilisateur au premier processeur du serveur d'aide au diagnostic,
    - en réponse à réception de l'entrée utilisateur, le premier processeur est en outre configuré pour,

        ◦ déterminer la prochaine action de dépannage de la séquence optimale d'actions de dépannage du système complexe, et
        envoyer la prochaine action de dépannage de la séquence optimale d'actions de dépannage du système complexe au second processeur du dispositif électronique portable.

12. Système selon les revendications 10 ou 11 dans lequel le dispositif d'entrée utilisateur est compris dans le dispositif d'affichage.

**Patentansprüche**

1. Diagnosehilfeverfahren (200) eines komplexen Systems, das eine Vielzahl von mechanischen, elektrischen, elektronischen und/oder Software-Komponenten enthält, die miteinander verbunden sind, wobei jede der Komponenten unter einem Teil der Komponenten automatisch überwacht wird und einem oder mehreren Fehlersensoren zugeordnet ist, wobei ein Teil der Komponenten nicht automatisch überwacht wird, wobei das von einem Prozessor durchgeführte Verfahren enthält:

- den Empfang einer Datei, die eine Modellierung des ganzen oder eines Teils des komplexen Systems durch einen Fehlerbaum (300) enthält, der alle oder einen Teil der Kombinationen von Ereignissen definiert, die ein Spitzenereignis (310) verursachen, das einem Fehler des komplexen Systems zugeordnet ist, wobei der Fehlerbaum eine Vielzahl von Zwischenereignissen (320) und eine Vielzahl von Basisereignissen (330) enthält,
- die Zuweisung (210) eines A-priori-Eintrittswahrscheinlichkeitwerts zu jedem der Basisereignisse des Fehlerbaums, um einen erweiterten Fehlerbaum zu generieren,
- die Zuweisung (220) einer Fehlerinformation zu jedem der Basisereignisse und jedem der Zwischenereignisse des erweiterten Fehlerbaums, die einer automatisch überwachten Komponente zugeordnet sind, wobei die Fehlerinformation ausgehend von den Fehlersensoren empfangen wird und eine Beobachtung des Betriebszustands der dem Ereignis des erweiterten Fehlerbaums zugeordneten Komponente beschreibt,
- die Berechnung (230) eines A-posteriori-Eintrittswahrscheinlichkeitswerts für jedes der Ereignisse des erweiterten Fehlerbaums ausgehend von den zugewiesenen A-priori-Eintrittswahrscheinlichkeitswerten und den zugewiesenen Fehlerinformationen,
- die Zuweisung (240) von Reparaturkosten zu jedem der Ereignisse des erweiterten Fehlerbaums, die einer Komponente zugeordnet sind, die nicht automatisch überwacht wird und die reparierbar ist, wobei die Reparaturkosten die für die Reparatur der Komponente notwendige Zeit definieren,
- die Modellierung (250), durch einen Markov-Entscheidungsprozess, PDM, ausgehend vom erweiterten Fehlerbaum, einer oder mehrerer möglicher Entwicklungen des komplexen Systems, als Antwort auf mindestens eine Reparaturaktion mindestens einer Komponente durch den Wartungsoperator, wobei die Reparaturaktion einer Identifikationsprozedur des Fehlers oder der Bestätigung des einwandfreien Betriebs der Komponente entspricht,
- die Bestimmung (260) einer optimalen Folge von Reparaturaktionen des komplexen Systems, gemäß einer Entscheidungspolitik, die den Erwartungswert der Summe der Reparaturkosten minimiert und die durch die Anwendung eines Auflösungsalgorithmus des PDM bestimmt wird.

2. Verfahren nach Anspruch 1, wobei der Schritt der Berechnung eines A-posteriori-Eintrittswahrscheinlichkeitswerts die Schritte aufweist:

- Konstruktion eines Bayes'schen Netzes ausgehend vom erweiterten Fehlerbaum, wobei das Bayes'sche Netz vorgesehen ist, um Vorhersagen betreffend Beziehungen zwischen Ereignissen des erweiterten Fehlerbaums ausgehend von den Fehlerinformationen und den A-priori-Wahrscheinlichkeitswerten zu realisieren, und
- Berechnung des Wahrscheinlichkeitswerts ausgehend vom Bayes'schen Netz.

3. Verfahren nach Anspruch 2, wobei die Knoten des Bayes'schen Netzes entsprechende Komponenten des komplexen Systems darstellen, wobei die Bögen zwischen den Knoten Verteilungen von bedingten Wahrscheinlichkeiten zugeordnet sind, die bestimmten der Komponenten des komplexen Systems zugeordnete Wahrscheinlichkeiten von Ereignissen darstellen, die Ereignissen zugeordnet sind, die anderen Komponenten des komplexen Systems zugeordnet sind.

4. Verfahren nach den vorhergehenden Ansprüchen, wobei der Schritt der Zuweisung von Reparaturkosten den Schritt des Erhalts der Reparaturkosten ausgehend von einer Kostenfunktion enthält, die mindestens von einem Glied, das der zum Reparieren der Komponente notwendigen Zeit entspricht, und einem Glied abhängt, das der Schwierigkeit des physischen Zugangs zum Reparieren der Komponente entspricht.

5. Verfahren nach den vorhergehenden Ansprüchen, wobei der Schritt der Modellierung durch einen PDM den Schritt der Definition eines PDM mit endlichem Horizont gemäß einem Quadrupel {S, A, T, R} enthält, wobei

- S eine Einheit ist, die die Zustände definiert, in denen sich das komplexe System zu einem Zeitpunkt t ausgehend von einem Anfangszustand des komplexen Systems befinden kann,
- A eine Einheit ist, die die Reparaturaktionen definiert, die abhängig vom Zustand des komplexen Systems realisierbar sind und die die Entwicklung des aktuellen Zustands des komplexen Systems beeinflussen,
- T eine Übergangsfunktion ist, die die Einheit der Übergangswahrscheinlichkeiten zwischen zwei Zuständen des komplexen Systems in den Zuständen t und t+1 als Antwort auf die Reparaturaktionen der Einheit A definiert,
- R eine Vergütungsfunktion ist, die die Gesamtheit der Reparaturkosten definiert, die den Reparaturaktionen der Einheit A zugeordnet sind.

6. Verfahren nach Anspruch 5, wobei, wenn T die Gesamtheit der Fehlerwahrscheinlichkeiten definiert, ein Endzustand des PDM erreicht ist, wenn mindestens eine Fehlerwahrscheinlichkeit eines Basisereignisses gleich 1 ist.

7. Verfahren nach Anspruch 5, wobei, wenn T die Gesamtheit der Fehlerwahrscheinlichkeiten definiert, ein Endzustand des PDM erreicht ist, wenn die Gesamtheit der Fehlerwahrscheinlichkeiten gleich 0 ist.

8. Verfahren nach Anspruch 5, wobei, wenn T die Gesamtheit der Fehlerwahrscheinlichkeiten definiert, ein Endzustand des PDM erreicht ist, wenn alle reparierbaren Knoten des komplexen Systems eine Fehlerwahrscheinlichkeit gleich 0 oder 1 haben.

9. Computerprogrammprodukt, das Anweisungen aufweist, die, wenn sie von einem Prozessor ausgeführt werden, den Prozessor veranlassen, ein Verfahren nach einem der vorhergehenden Ansprüche durchzuführen.

10. Diagnosehilfesystem (100) eines komplexen Systems, das eine Vielzahl von mechanischen, elektrischen, elektronischen und/oder Software-Komponenten enthält, die miteinander verbunden sind, wobei jede der Komponenten unter einem Teil der Komponenten automatisch überwacht wird und einem oder mehreren Fehlersensoren zugeordnet ist, wobei ein Teil der Komponenten nicht automatisch überwacht wird, wobei das System einen Diagnosehilfeserver (110) und eine elektronische Vorrichtung (120) enthält, die beide vorgesehen sind, um auf ein Kommunikationsnetz (130) zuzugreifen:

- der Diagnosehilfeserver enthält einen ersten Prozessor (111), der konfiguriert ist, ein Verfahren (200) nach einem der Ansprüche 1 bis 8 ausgehend von einer Datei durchzuführen, die eine Modellierung des ganzen oder eines Teils des komplexen Systems durch einen Fehlerbaum (300) enthält, der alle oder einen Teil der Kombinationen von Ereignissen definiert, die ein Spitzenereignis (310) verursachen, das einem Fehler des komplexen Systems zugeordnet ist, wobei der Fehlerbaum eine Vielzahl von Zwischenereignissen (320) und eine Vielzahl von Basisereignissen (330) enthält,
- die tragbare elektronische Vorrichtung enthält einen zweiten Prozessor (121), der mit einer Benutzereingabevorrichtung (122) und mit einer Anzeigevorrichtung (123) verbunden ist, wobei der zweite Prozessor konfiguriert ist, um

o alles oder einen Teil der optimalen Folge von Reparaturaktionen des komplexen Systems über das Kommunikationsnetz zu empfangen,
o auf der Anzeigevorrichtung ein Bild anzuzeigen, das für die aktuelle zu realisierende Reparaturaktion repräsentativ ist, ausgehend von der optimalen Folge von Reparaturaktionen des komplexen Systems,
o ein von der Benutzereingabevorrichtung kommendes Eingabesignal zu erkennen, das für eine Benutzereingabe während der Anzeige des für die zu realisierende aktuelle Reparaturaktion repräsentativen Bilds repräsentativ ist,
o als Antwort auf eine Benutzereingabe, die die Erkennung eines Fehlers oder die Bestätigung des einwandfreien Betriebs der der zu realisierenden aktuellen Reparaturaktion zugeordneten Komponente anzeigt, auf der Anzeigevorrichtung ein Bild anzuzeigen, das für die nächste zu realisierende Reparaturaktion repräsentativ ist, ausgehend von der optimalen Folge von Reparaturaktionen des komplexen Systems.

11. System nach Anspruch 10, wobei

- der zweite Prozessor der tragbaren elektronischen Vorrichtung außerdem konfiguriert ist, die Benutzereingabe an den ersten Prozessor des Diagnosehilfeservers zu schicken,
- als Antwort auf den Empfang der Benutzereingabe der erste Prozessor außerdem konfiguriert ist, um

o die nächste Reparaturaktion der optimalen Folge von Reparaturaktionen des komplexen Systems zu bestimmen, und
die nächste Reparaturaktion der optimalen Folge von Reparaturaktionen des komplexen Systems an den zweiten Prozessor der tragbaren elektronischen Vorrichtung zu schicken.

12. System nach den Ansprüchen 10 oder 11, wobei die Benutzereingabevorrichtung in der Anzeigevorrichtung enthalten ist.

**Claims**

1. Method (**200**) for assisting with diagnosis of a complex system comprising a plurality of mechanical, electric, electronic and/or software components connected to each other, each of the components among a portion of the components being under automatic monitoring and associated with one or more fault sensors, a portion of the components not being under automatic monitoring, the method, implemented by a processor, comprising:

- receiving a file containing a modeling of some or all of the complex system by a fault tree (**300**) defining some or all of the combinations of events causing a top event (**310**) associated with a failure of the complex system, the fault tree comprising a plurality of intermediate events (**320**) and a plurality of basic events (**330**),
- assigning (**210**) an a priori probability of occurrence value to each of the basic events of the fault tree, in order to generate an augmented fault tree,
- assigning (**220**) failure information to each of the basic events and each of the intermediate events of the augmented fault tree which are associated with a component under automatic monitoring, the failure information being received from fault sensors and describing an observation of the operating state of the component associated with the event of the augmented fault tree,
- calculating (**230**) an ex-post probability of occurrence value for each of the events of the augmented fault tree, based on the assigned a priori probability of occurrence values and the assigned failure information,
- assigning (**240**) a troubleshooting cost to each of the events of the augmented fault tree which are associated with a component not under automatic monitoring and serviceable, the troubleshooting cost defining the time required for troubleshooting said component,
- modeling (**250**), by a Markov decision process, MDP, based on the augmented fault tree, one or more possible evolutions of the complex system in response to at least one troubleshooting action by the maintenance operator on at least one component, the troubleshooting action corresponding to a procedure for identifying the failure or confirming the proper operation of the component,
- determining (**260**) an optimal sequence of troubleshooting actions for the complex system, according to a decision policy which minimizes the expected value of the sum of the troubleshooting costs and which is determined by applying an MDP-solving algorithm.

2. Method according to claim 1, wherein the step of calculating an ex-post probability of occurrence value comprises the steps of:

- constructing a Bayesian network from the augmented fault tree, the Bayesian network being provided for making predictions concerning relationships between events of the augmented fault tree based on failure information and a priori probability values, and
- calculating the probability value from the Bayesian network.

3. Method according to claim 2, wherein the nodes of the Bayesian network represent corresponding components of the complex system, the arcs between nodes being associated with distributions of conditional probabilities which represent probabilities of events associated with certain components of the complex system which are associated with events associated with other components of the complex system.

4. Method according to the preceding claims, wherein the step of assigning a troubleshooting cost comprises the step of obtaining the troubleshooting cost from a cost function dependent on at least one term which corresponds to the time required for troubleshooting the component and a term which corresponds to the physical access difficulty for troubleshooting the component.

5. Method according to the preceding claims, wherein the step of modeling by an MDP comprises the step of defining an MDP with a finite horizon described by a quadruplet $\{S,A,T,R\}$ in which:

- $S$ is a set defining the states in which the complex system can be found at time $t$ starting from an initial state of the complex system,
- $A$ is a set defining the troubleshooting actions that can be performed as a function of the state of the complex system and which influence the evolution of the current state of the complex system,
- $T$ is a transition function defining the set of probabilities of transitioning between two states of the complex system at states $t$ and $t + 1$, in response to the troubleshooting actions of set $A$,
- $R$ is a reward function defining the set of troubleshooting costs associated with the troubleshooting actions of set $A$.

6. Method according to claim 5, wherein, when $T$ defines the set of failure probabilities, a terminal state of the MDP is reached when at least one failure probability of a basic event is equal to 1.

7. Method according to claim 5, wherein, when *T* defines the set of failure probabilities, a terminal state of the MDP is reached when the set of the failure probabilities is equal to 0.

8. Method according to claim 5, wherein, when *T* defines the set of failure probabilities, a terminal state of the MDP is reached when all the serviceable nodes of the complex system have a failure probability equal to 0 or 1.

9. Computer program product comprising instructions which, when executed by a processor, cause said processor to carry out a method according to any one of the preceding claims.

10. System (**100**) for assisting with diagnosis of a complex system comprising a plurality of mechanical, electric, electronic and/or software components connected to each other, each of the components among a portion of the components being under automatic monitoring and associated with one or more fault sensors, a portion of the components not being under automatic monitoring, the system comprising a diagnosis assistance server (**110**) and an electronic device (**120**) both of which are arranged for accessing a communication network (**130**):

   - the diagnosis assistance server comprises a first processor (**111**) configured to carry out a method (**200**) according to any one of claims 1 to 8, based on a file containing a modeling of some or all of the complex system by a fault tree (**300**) defining some or all of the combinations of events causing a top event (**310**) associated with a failure of the complex system, the fault tree comprising a plurality of intermediate events (**320**) and a plurality of basic events (**330**),
   - the portable electronic device comprises a second processor (**121**) coupled to a user input device (**122**) and to a display device (**123**), in which the second processor is configured for:

      - receiving all or part of the optimal sequence of troubleshooting actions for the complex system, via the communication network,
      - displaying on the display device an image representative of the current troubleshooting action to be performed, based on the optimal sequence of troubleshooting actions for the complex system,
      - detecting an input signal from the user input device, which is representative of a user input during the displaying of the image representative of the current troubleshooting action to be performed,
      - in response to a user input which is indicative of detection of a failure or confirmation of the proper operation of the component associated with the current troubleshooting action to be performed, displaying on the display device an image representative of the next troubleshooting action to be performed, based on the optimal sequence of troubleshooting actions for the complex system.

11. System according to claim 10, wherein:

   - the second processor of the portable electronic device is further configured for sending the user input to the first processor of the diagnostic assistance server,
   - in response to receiving the user input, the first processor is further configured for:

      - determining the next troubleshooting action from the optimal sequence of troubleshooting actions for the complex system, and
      - sending the next troubleshooting action, from the optimal sequence of troubleshooting actions for the complex system to the second processor of the portable electronic device.

12. System according to claims 10 or 11, wherein the user input device is comprised in the display device.

**FIG. 1**

**FIG. 2**

FIG. 3

FIG. 4

400

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017312614 A1

**Littérature non-brevet citée dans la description**

- **M. BOUISSOU.** Gestion de la complexité dans les études quantitatives de sûreté de fonctionnement de systèmes. *Eyrolles,* 2008
- **M. BOUISSOU.** Deux méthodes originales pour calculer les performances d'un système possédant des états de fonctionnement dégradé. *12ème congrès de fiabilité et maintenabilité,* 2000

- **A. BOBBIO ; L. PORTINALE ; M. MINICHINO ; E. CIANCAMERLA.** Improving the analysis of dependable systems by mapping fault trees into Bayesian networks. *Reliability Engineering & System Safety.,* Mars 2001, vol. 71 (3), 249-260